# EUROPEAN PATENT APPLICATION

(11) **EP 4 618 314 A1**
(43) Date of publication of application: **17.09.2025**
(21) Application number: 25162329.4
(22) Date of filing: 07.03.2025
(51) Int. Cl.: H01R 4/34, B60R 16/00, H01M 50/50, H01R 4/70, H01R 11/12, H02G 3/00, H02G 5/00

(54) **SYSTEM FOR CONNECTING TWO SEPARATE BUSBARS TO A COAXIAL BUSBAR**

(30) Priority: 11.03.2024 DE 102024106867
(71) Applicant: TE Connectivity Solutions GmbH, 8200 Schaffhausen (CH)
(72) Inventor: BALLES, Wolfgang, 8200 Schaffhausen (CH); SAENGER, Walter, 8200 Schaffhausen (CH); SCHAEFER, Lucia, 8200 Schaffhausen (CH)
(74) Representative: Grünecker Patent- und Rechtsanwälte PartG mbB

(57) **Abstract**

The system (20) presented for connecting two separate busbars (6a, 6b) to a coaxial busbar (4) optimizes the electrical connection in electromobility and energy storage systems. An innovative housing assembly (2, 3) integrates specific receptacles (10, 7a, 7b) for coaxial busbars (4) and separate busbars (6a, 6b), supported by intermediate busbars (5a, 5b) that are connectable in an electrically conductive manner, in particular connectable in a cohesive bond manner. The connection assembly (1) presented facilitates efficient and safe assembly and provides flexibility for various applications. The invention addresses the challenges of electromobility and energy distribution by providing a robust and adaptable solution for the integration in compact as well as power-intensive systems, making it an attractive choice for advanced applications.

## Description

The invention relates to a system for connecting busbars.

Busbars are used in the field of electromobility to carry the comparatively high currents for charging the batteries or for providing the drive power in electric vehicles. Different systems are used for connecting the busbars.

Since the installation space in electric vehicles is often very limited, systems for connecting busbars are required that are as compact as possible, that at the same time transmit the high currents with low losses, and are easy to manage.

The object of the present invention is therefore to create such a system.

According to the invention, the above-mentioned object is satisfied by a system for connecting two separate busbars to a coaxial busbar, which comprises at least two busbars arranged coaxially to one another, with a housing assembly which comprises a receptacle for the coaxial busbar, wherein the receptacle extends in an direction of insertion, as well as a first receptacle for the one of the two separate busbars and a second receptacle for the other of the two separate busbars, with a first intermediate busbar for connecting the receptacle for the coaxial busbar to the first receptacle, wherein the first intermediate busbar is configured to be connectable to the one busbar of the coaxial busbar in an electrically conductive manner and to a second intermediate busbar for connecting the receptacle for the coaxial busbar to the second receptacle, wherein the second intermediate busbar is configured to be connectable to the other busbar of the coaxial busbar in an electrically conductive manner, and wherein the first and the second intermediate busbar can be arranged in the receptacle in the direction of insertion spaced apart from one another.

The direction of insertion is the direction in which the coaxial busbar can be inserted into the housing assembly. This direction can correspond to the longitudinal extension of the coaxial busbar and enables precise positioning within the housing assembly.

A high degree of reliability and safety is obtained by introducing optimizations in the mechanical configuration and electrical performance of the system according to the invention. This includes not only the mechanical integrity and electrical conductivity, but also aspects such as touch protection and thermal management capability which are required for long-term and safe operation under various operating conditions.

The above solution can be improved by the following independent, individually advantageous, and freely combinable further developments.

In a preferred embodiment of the system according to the invention, the current-conducting connection between the first intermediate busbar and the one busbar of the coaxial busbar and/or the current-conducting connection between the second intermediate busbar and the other busbar of the coaxial busbar is or are configured as a cohesive bond connection.

A further preferred embodiment of the system according to the invention is equipped with a first touch-protected fastening element that can be operated from outside the housing assembly and that projects through the first intermediate busbar into the first receptacle, and with a second touch-protected fastening element that can be operated from outside the housing assembly and that projects through the second intermediate busbar into the second receptacle.

In particular, according to a further particularly preferred embodiment of the invention, it is provided that at least one of the fastening elements is configured as a touch-protected screw.

A particularly advantageous further development of the system according to the invention provides that the system comprises at least one threaded sleeve which is fastened to one of the two separate busbars, in particular inserted into an opening in the latter, and screwed to a touch-protected screw.

The threaded sleeves are preferably made of steel in order to withstand higher mechanical loads.

In particular, a wall of the housing assembly can be disposed between the first and the second receptacle. This can prevent, for example, creepage currents and improve the electrical insulation of the two busbars.

It can also be provided that the first screw ends in the first receptacle and the second screw in the second receptacle.

The intermediate busbars can preferably each be made of copper. Aluminum or another material with a comparably low electrical resistance is also possible.

The touch-protected screw can be configured such that its screw head and/or oppositely disposed screw end are overmolded with plastic, wherein a screw shaft made of steel a shoulder with an enlarged diameter that rests on a surface of the intermediate busbar facing away from the respective busbar of the two separate busbars.

The threaded sleeve can be fitted into an opening in the respective busbar of the two separate busbars and can abut with a radially outwardly projecting collar against a surface of the respective busbar of the two separate busbars facing away from the respective intermediate busbar.

The opening provided in the respective busbar of the two separate busbars can be configured as a round hole that is closed all the way around or open on one side, or as an elongate hole that is closed all the way around or open on one side.

In a further preferred embodiment of the system according to the invention, the first receptacle and the second receptacle extend in the housing assembly in a direction that runs transversely to the direction of insertion.

In a further preferred embodiment of the system according to the invention, it is provided that the first intermediate busbar and the second intermediate busbar each comprise a first connecting section which is arranged in the receptacle for the coaxial busbar, and a second connecting section which is arranged either in the first receptacle for the one of the two separate busbars or in the second receptacle for the other of the two separate busbars.

In yet another particularly advantageous embodiment of the system according to the invention, it is provided that the first connecting section is configured to be sleeve-shaped or hollow-cylindrical at least in part or planar at least in part.

According to yet another preferred embodiment of the invention, it is provided that the main direction of extension of the first connecting section is changed as compared to a main direction of extension of the first connecting section, wherein this change in direction is formed in particular by an angular deformation between the connecting sections.

A further advantageous embodiment of the system according to the invention provides that the second connecting section be configured as a fastening tab and this fastening tab comprises an opening through which the corresponding fastening element is guided.

The opening provided in the fastening tab can be configured as a round hole that is closed all the way round or open on one side or as an elongated hole that is closed all the way around or open on one side.

In a system according to the invention according to a further preferred embodiment of the invention, the opening in the fastening tab is insulated from the respective busbar of the two separate busbars.

For example, the first screw and the second screw can each be guided through a plastic sleeve that is inserted into openings in the first and the second intermediate busbar and extends from these openings to the associated first and second threaded sleeve.

The intermediate busbar and the busbar of the two separate busbars connected thereto can be directly in contact with one another. Alternatively, the intermediate busbar and the connected busbar of the two separate busbars can be spaced apart from one another, and an electrical connection between these busbars can be established exclusively by way of the screw connection.

Another particularly expedient embodiment of the system according to the invention provides that the first intermediate busbar and the second intermediate busbar each be configured as L-shaped elements.

A particularly advantageous development of the system according to the invention provides that the housing assembly comprises a first housing half in which the receptacle for the coaxial busbar is disposed and a second housing half that can be plugged together with the first housing half and in which both the first receptacle as well as the second receptacle are disposed.

In particular, the first housing half and the second housing half can each be made of plastic, in particular of glass fiber reinforced plastic.

According to a particularly advantageous embodiment of the system according to the invention, the intermediate busbars are arranged at least in part in the second half of the housing.

The intermediate busbars can preferably each be configured as multi-layer metal sheets that ensure flexibility perpendicular to the sheet plane. Multi-layer metal sheets improve adaptability due to their increased flexibility and optimize current conduction by reducing resistance losses and increasing electrical efficiency.

A further advantageous embodiment of the invention arises from the fastening elements being attached to the first housing half.

In particular, the screw head of the screws can each comprise a plastic external thread that is screwed into an internal thread of the second housing half, and the screw shaft of the screws can each comprise an external thread that is screwed into an internal thread of the threaded sleeve, which is preferably made of steel.

In particular, a fastening opening in the second housing half, through which the respective screw is inserted, can be covered at least in part by a screw holder that is attached in a form-fit manner to the second housing half in order to enable the screw to be secured.

Furthermore, according to the invention, a connection assembly is provided which comprises a system as described above, a coaxial busbar and two separate busbars, wherein one of the two separate busbars is connected to the first intermediate busbar by way of a first fastening element in the first receptacle and the other of the two separate busbars is connected to the second intermediate busbar by way of a second fastening element in the second receptacle.

The connection assembly according to the invention provides a number of advantages that make it particularly attractive for use with modern electromobility and energy system applications. By combining coaxial and intermediate busbars, the assembly improves electrical conductivity and minimizes losses, while the robust construction and touch-protected components ensure high mechanical stability and safety. The simple assembly enables quick and flexible installation that can easily be adapted to different requirements.

The at least two busbars of the coaxial busbar can be made of aluminum or an alloy containing aluminum.

In particular, the at least two busbars of the coaxial busbar can be separated from one another by an intermediate insulation and surrounded by an external insulation.

A preferred further development can provide that the coaxial busbar comprises exactly two busbars and is configured to be cylindrical, wherein the first busbar forms a cylindrical core and the second busbar forms a hollow cylindrical shell within the coaxial busbar.

The intermediate busbars can each comprise a hollow cylindrical section that encloses a circumference of the respective busbar of the coaxial busbar and a planar section that protrudes from this respective busbar and comprises an opening for the screw to pass through.

An alternative preferred development can provide that the coaxial busbar comprises exactly two busbars and a flat rectangular cross-sectional contour, wherein the first busbar forms a flat, rectangular core in cross-section and the second busbar forms a flat, rectangular and hollow shell in cross-section within the coaxial busbar.

The intermediate busbars can each be configured as L-shaped angled elements in which one leg rests over the entire surface on a long underside of the respective busbar of the coaxial busbar and a leg angled away from it comprises an opening for passing the screw through.

The two separate busbars can be arranged parallel adjacent to one another, in particular parallel adjacent to one another offset in a direction that runs parallel to a direction of longitudinal extension of the coaxial busbar.

The two intermediate busbars can also be arranged parallel adjacent to one another, in particular parallel adjacent to one another offset in a direction that runs parallel to a direction of longitudinal extension of the coaxial busbar.

An advantageous embodiment of the connection assembly according to the invention provides that the fastening tabs of the intermediate busbars each directly abut a corresponding one of the two separate busbars.

According to a preferred embodiment of the invention, in the receptacle for the coaxial busbar, the intermediate busbars are each connected in a cohesive bond manner to a corresponding busbar of the coaxial busbar.

The cohesive bond connection between the first (second) intermediate busbar and the one (the other) of the two busbars of the coaxial busbar can be established by welding, in particular by torsional ultrasonic welding, friction welding, electron beam welding, nanofoil welding or roll seam welding, or by soldering, in particular by induction brazing.

The receptacle for the coaxial busbar can comprise an inner contour perpendicular to the direction of insertion which corresponds to the outer contour of the coaxial busbar together with the intermediate busbars attached thereto perpendicular to the longitudinal extension of the coaxial busbar. This allows the coaxial busbar provided with the intermediate busbars to be inserted in a simple manner into the receptacle for the coaxial busbar.

According to a further embodiment of the invention, it is further provided that the first housing half is configured to be pre-assembled with the fastening elements, the coaxial busbar and the intermediate busbars and the second housing half is configured such that it can be plugged together with the first housing half.

In a particularly preferred manner, the second housing half is configured to be pre-assembled with the two separate busbars.

A cooling device can be integrated into the construction of the connection assembly.

The above embodiments are explained in more detail hereafter by way of embodiments with reference to the drawings. The same reference numerals are used for elements that correspond to one another in terms of function and/or structure.

In accordance with the above, a feature of the embodiment described hereafter can be omitted if the technical effect associated with this feature is not important for a specific application. Conversely, in accordance with the above observations, a feature not present in the embodiment described hereafter can be added if the technical effect associated with this feature is important for a specific application, where:
- Fig. 1: is a schematic perspective exploded view of a first embodiment with a coaxial busbar;
- Fig. 2: is a schematic cross-sectional view of the embodiment of Fig. 1;
- Fig. 3: is a schematic perspective exploded view of a second embodiment with a coaxial busbar;
- Fig. 4: is a schematic cross-sectional view of the embodiment of Fig. 3;
- Fig. 5: is a schematic perspective exploded view of a third embodiment;
- Fig. 6: is a schematic cross-sectional view of the embodiment of Fig. 5;
- Fig. 7: is a schematic perspective exploded view of a fourth embodiment;
- Fig. 8: is a schematic cross-sectional view of the embodiment of Fig. 7;
- Fig. 9: is a schematic perspective cross-sectional view of a fifth embodiment; and
- Figs. 10 to 12: are a schematic representation of an assembly sequence for producing a sixth embodiment.

Systems 20 shown in the figures are used to connect a coaxial busbar 4 to two separate busbars 6a, 6b. This coaxial busbar 4 comprises two coaxially arranged busbars 4a, 4b which are typically made of aluminum or an aluminum alloy to ensure high electrical conductivity and mechanical stability. These two busbars 4a, 4b are insulated from each other by an intermediate insulation 4c and are additionally enclosed by an external insulation 4d, which increases the electrical safety and insulation integrity of the system.

System 20 establishes the electrical connection between busbars 4a, 4b of coaxial busbar 4, that are arranged coaxially and have their insulation stripped, and two external separate busbars 6a, 6b. System 20, together with coaxial busbar 4 and two separate busbars 6a, 6b, forms a connection assembly 1 that can be used as a DC connector within a charging inlet of an electric vehicle.

System 20 comprises a housing assembly 2, 3 that provides a receptacle 10 for coaxial busbar 4. This receptacle 10 extends in a direction of insertion E, which, in the embodiments illustrated, coincides with a longitudinal direction of extension of coaxial busbar 4. Furthermore, housing assembly 2, 3 comprises a first receptacle 7a for receiving one of separate busbars 6a and a second receptacle 7b for receiving other separate busbar 6b, which enables precise positioning and connecting of busbars 6a, 6b.

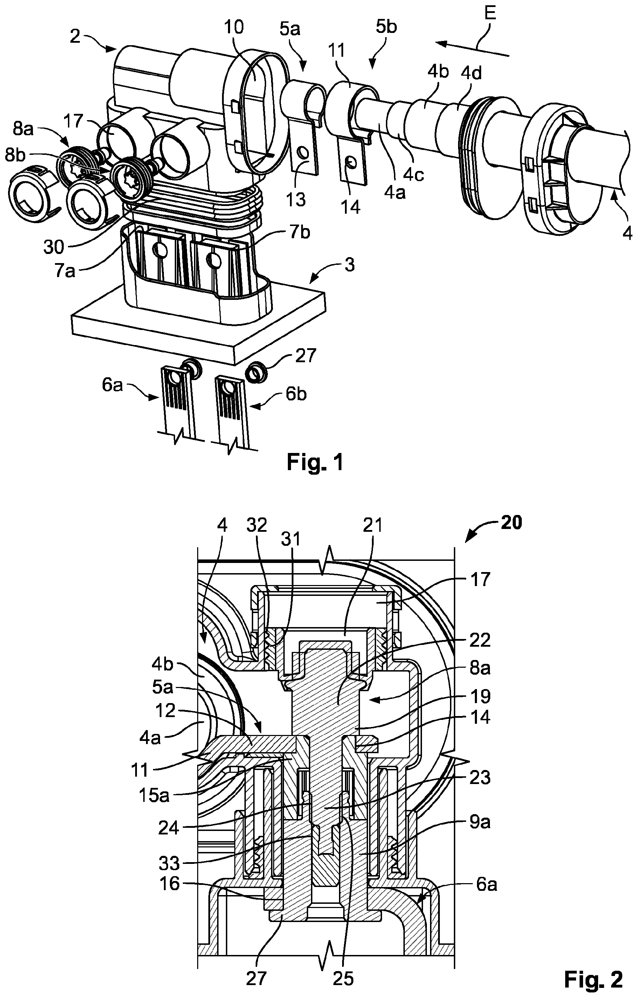

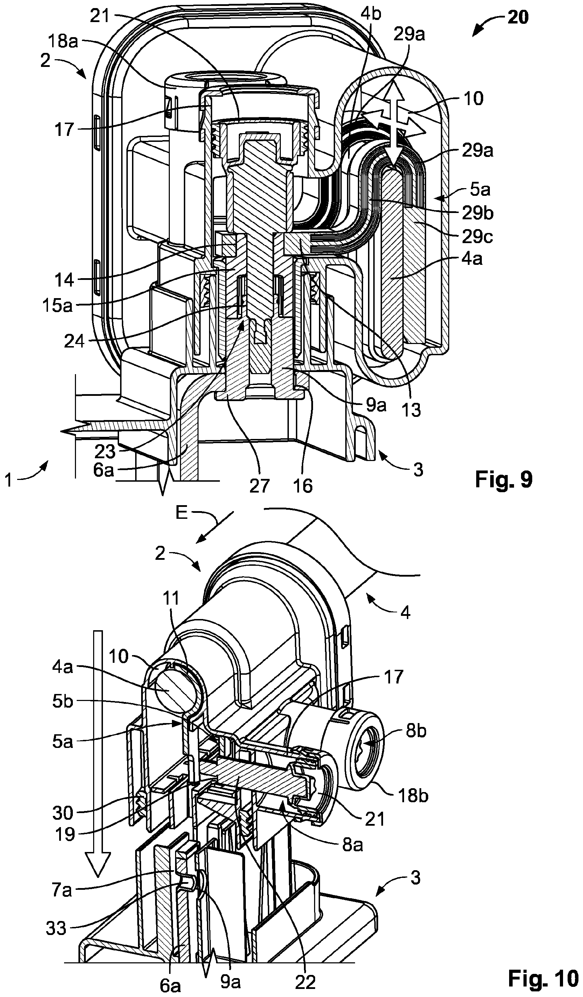

As can be seen in particular from the exploded views in Figs. 1, 3, 5 and 7 and from the assembly sequence in Figs. 10 to 12, housing assembly 2, 3 is composed of a first housing half 2, which comprises receptacle 10 for coaxial busbar 4, and a second housing half 3. Second housing half 3, which is connected to first housing half 2 by being plugged together, contains both first receptacle 7a for separate busbar 6a as well as second receptacle 7b for separate busbar 6b.

First housing half 2 and second housing half 3 are made of plastic material, preferably glass fiber reinforced plastic material, to ensure high strength and durability. To ensure effective sealing after housing halves 2, 3 have been plugged together, a circumferential seal 30 is integrated between them.

After two housing halves 2, 3 have been plugged together, intermediate busbars 5a, 5b are in an arrangement that enables a connection to busbars 4a, 4b of coaxial busbar 4 in first housing half 2 and at the same time allows them to protrude into receptacles 7a, 7b for separate busbars 6a, 6b in second housing half 3. Receptacles 7a, 7b for separate busbars 6a, 6b are configured such that, once housing halves 2, 3 have been plugged together, they are disposed at least in part in both housing halves 2, 3. In addition, sections of receptacles 7a, 7b can also be located exclusively within one of housing halves 2, 3. This configuration enables efficient use of space and stable anchoring of separate busbars 6a, 6b, as illustrated in the cross-sectional views according to Figs. 2, 4, 6, 8, 9 and 10 to 12.

The views in Figs. 1, 3, 6 and 8 clearly show that first receptacle 7a for one separate busbar 6a and second receptacle 7b for other separate busbar 6b are integrated into housing assembly 2, 3 such that they have an orientation that is perpendicular to direction of insertion E. This enables a space-saving configuration of receptacles 7a, 7b arranged parallel to one another and offset in a direction parallel to direction of insertion E of coaxial busbar 4, which ensures optimal use of space within connection assembly 1.

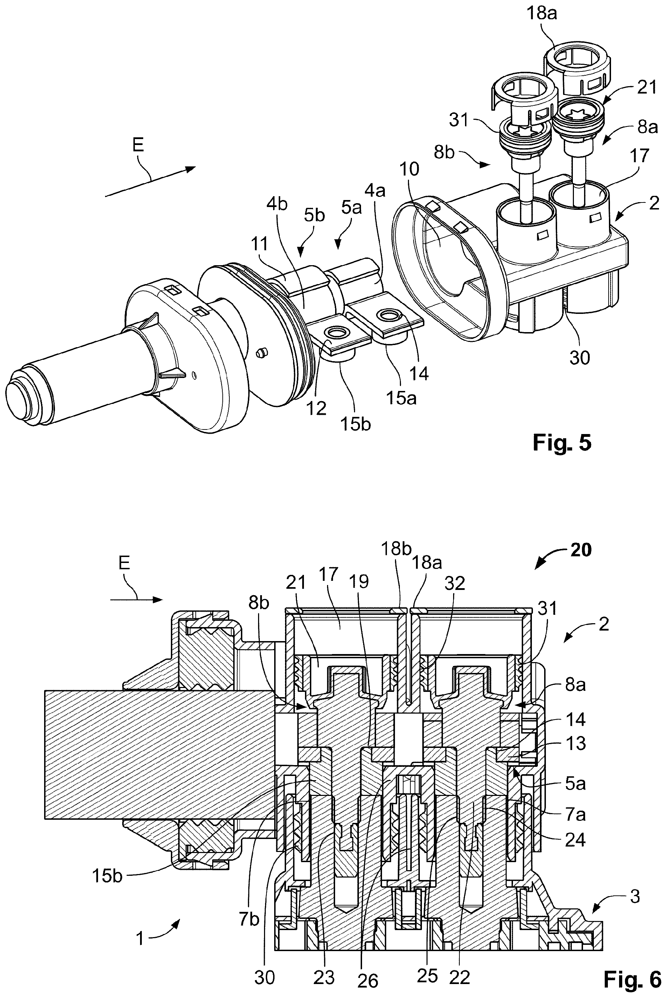

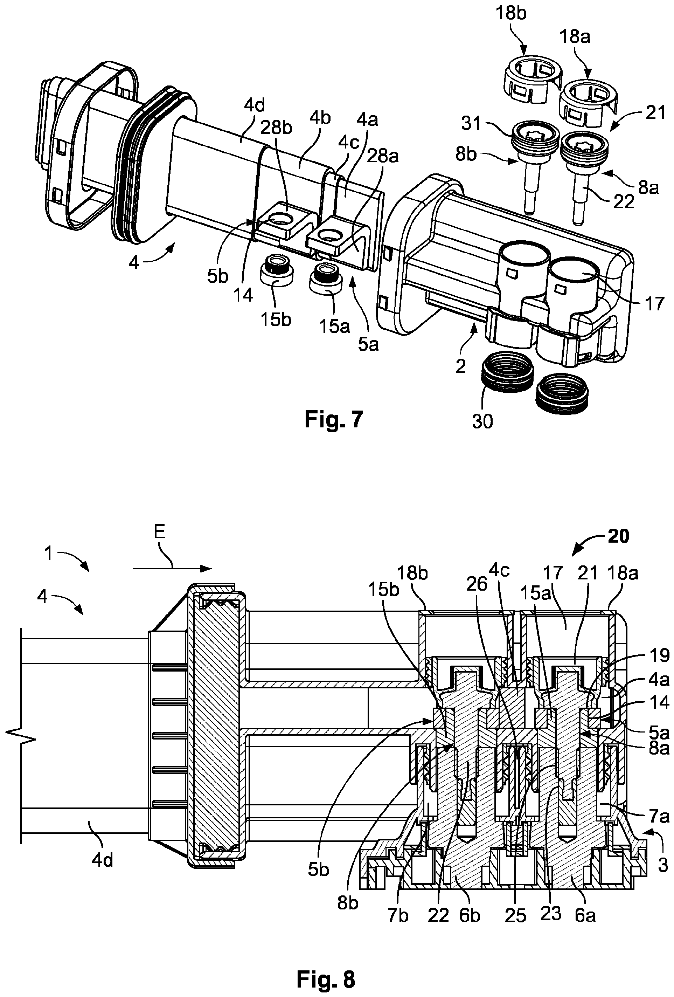

As illustrated by the perspective exploded views according to Figs. 1, 3, 5 and 7 and the cross-sectional views parallel to direction of insertion E according to Figs. 6 and 8, system 20 comprises a first intermediate busbar 5a, which is connected in a cohesive bond manner to one of busbars 4a of coaxial busbar 4, and a second intermediate busbar 5b, which is likewise connected in a cohesive bond manner to other busbar 4b of coaxial busbar 4. Two intermediate busbars 5a, 5b are each made of copper, which is crucial for their good conductivity and mechanical stability.

The cohesive bond connection between first intermediate busbar 5a and second intermediate busbar 5b, both made of copper, respectively to one of coaxially arranged busbars 4a, 4b of coaxial busbar 4, which are made of aluminum or an aluminum alloy, can be realized by various welding methods - including torsional ultrasonic welding, friction welding, electron beam welding, nanofoil welding or roll seam welding - or by soldering, such as induction brazing.

The cross-sectional views perpendicular and parallel to direction of insertion E, which in the present case coincide with a longitudinal direction of extension L of coaxial busbar 4, as shown in Figs. 2, 4, 6 and 8, show that first intermediate busbar 5a extends from receptacle 10 for coaxial busbar 4 to first receptacle 7a for one of two separate busbars 6a. Analogously, second intermediate busbar 5b extends from receptacle 10 for coaxial busbar 4 to second receptacle 7b for the other of two separate busbars 6b.

As can be clearly seen in particular from Figs. 1, 3 and 5 to 9, two separate busbars 6a, 6b can be arranged parallel adjacent to one another, more precisely offset parallel adjacent to one another in a direction that runs parallel to direction of insertion E. Accordingly, intermediate busbars 5a, 5b can also be arranged parallel adjacent to one another, more precisely offset parallel adjacent to one another in a direction that runs parallel to direction of insertion E. First intermediate busbar 5a and second intermediate busbar 5b are positioned within receptacle 10 in direction of insertion E such that they have a fixed distance from one another, which enables an orderly and efficient connection configuration.

To securely fasten intermediate busbars 5a, 5b to respective separate busbars 6a, 6b, screws 8a, 8b are used as touch-protected fastening elements that can be operated from outside housing assembly 2, 3. For this purpose, a first touch-protected screw 8a, which is accessible from outside housing assembly 2, 3, is inserted through first intermediate busbar 5a into corresponding receptacle 7a for one busbar 6a. Analogously, a second touch-protected screw 8b is inserted through second intermediate busbar 5b into receptacle 7b for other busbar 6b. This enables a robust and secure connection, as is particularly illustrated in the cross-sectional views according to Figs. 6 and 8.

First and second intermediate busbars 5a, 5b are fastened to separate busbars 6a, 6b by way of two screw connections using threaded sleeves 9a, 9b. First threaded sleeve 9a is provided with an internal thread 24, with which external thread 25 on screw end 23 of first screw 8a engages, while second threaded sleeve 9b comprises a corresponding internal thread 24 with which external thread 25 on screw end 23 of second screw 8b engages. This form-fit connection ensures secure and permanent fastening, as can be seen from the cross-sectional views according to Figs. 2, 4, 6, 8 and 9.

Screw shafts 22 of two screws 8a, 8b and threaded sleeves 9a, 9b are made of steel and comprise shoulders 19 with an enlarged diameter, each of which abuts a surface of intermediate busbar 5a, 5b facing away from respective busbar 6a, 6b of separate busbars 6a, 6b. This configuration ensures a reliable mechanical and electrical connection between intermediate busbars 5a, 5b and separate busbars 6a, 6b due to the screw connections, which is important for system integrity. The touch protection of screws 8a, 8b is obtained by the fact that their screw head 21 and oppositely disposed screw end 23 are each overmolded with plastic material.

As can be seen from the cross sections shown in Fig. 6 and Fig. 8, each running parallel to direction of insertion E, touch-protected screws 8a, 8b are sized and positioned such that first screw 8a ends in first receptacle 7a for one separate busbar 6a, while second screw 8b ends in second receptacle 7b for other separate busbar 6b.

Threaded sleeves 9a, 9b made of steel and illustrated in Figs. 1 to 4 and9 to 12 fit precisely into openings 16 of separate busbars 6a, 6b and abut, with a radially projecting collar 27, the surface of respective busbar 6a, 6b that faces away from respective intermediate busbar 5a, 5b. Tightening screws 8a, 8b in threaded sleeves 9a, 9b therefore ensures a firm mechanical and electrical connection between intermediate busbars 5a, 5b and separate busbars 6a, 6b. A variant illustrated in Figs. 5 to 8 shows that separate busbars 6a, 6b can be constructed integrally with threaded sleeves 9a, 9b, which entails additional advantages in production and assembly.

There are openings 16 in separate busbars 6a, 6b, which in Figs. 1 to 4 and9 to 12 are configured as circumferentially closed round holes for receiving first threaded sleeve 9a for first screw 8a and second threaded sleeve 9b for second screw 8b. Alternatively, it is possible to configure these openings 16 as elongated holes to enable assembly flexibility or to configure them as round or elongated holes that are open on one side, which can facilitate alignment and fastening of the components during assembly.

In the illustrations of the first and third embodiments of system 20 according to the invention, as is evident in Figs. 1, 2, 5 and 6, it is characteristic for a cylindrical coaxial busbar 4, its first busbar 4a forming a cylindrical core and its second busbar 4b forming a hollow cylindrical shell within coaxial busbar 4, that first as well second intermediate busbar 5a, 5b comprise sleeve-shaped or hollow cylindrical sections as first connecting sections 11, which are each arranged in receptacle 10 for coaxial busbar 4.

These first connecting sections 11 of intermediate busbars 5a, 5b, in the form of sleeve-shaped or hollow-cylindrical sections, are positioned in receptacle 10 for coaxial busbar 4 such that they engage at the circumference at least in part around exposed cylindrical inner busbar 4a and exposed hollow-cylindrical outer busbar 4b of coaxial busbar 4. This configuration creates an extensive contact surface between intermediate busbar 5a, 5b and respective busbar 4a, 4b of coaxial busbar 4 in a cohesive bond connection, which can be realized by way of welding or soldering processes and thus ensures a high connection quality.

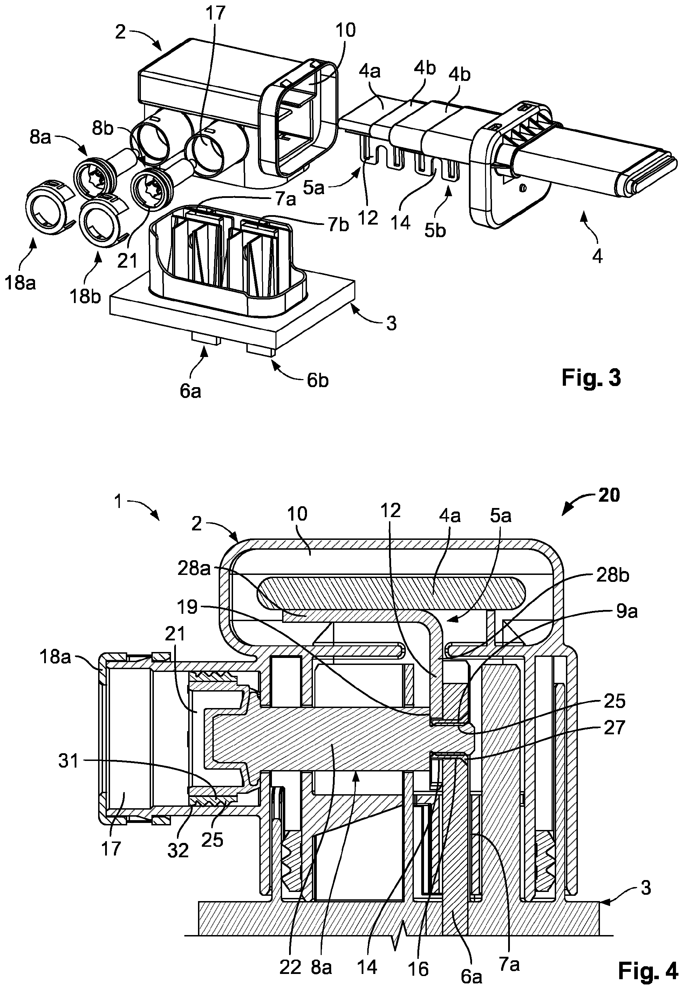

In the modifications shown in the second and fourth embodiment of system 20 according to the invention according to Figs. 3, 4, 7 and 8, coaxial busbar 4 has a respective flat, rectangular cross-sectional contour, where first busbar 4a forms a flat, rectangular core in cross-section and second busbar 4b forms a flat, rectangular and hollow shell in cross-section within coaxial busbar 4.

Here, L-shaped angled elements are used as intermediate busbars 5a, 5b. A first leg 28a of these L-shaped elements establishes a cohesive bond connection to corresponding flat, rectangular busbars 4a, 4b of coaxial busbar 4. For this purpose, this first leg 28a abuts, over its entire surface, a long underside of respective busbar 4a, 4b of coaxial busbar 4. A second leg 28b, which protrudes orthogonally from first leg 28a, forms a planar section as second connecting section 12, which is configured such that it comprises opening 14 for passing corresponding screw 8a, 8b through, thereby facilitating the assembly of the screw connections and enabling firm mechanical and electrical coupling.

The fifth embodiment shown in Fig. 9 shows intermediate busbars 5a, 5b in system 20 according to the invention which combine geometric elements of the preceding embodiments with one another. These intermediate busbars 5a, 5b have an arcuate connection 29a between two legs 29b, 29c running parallel to one another. This structure nestles closely against the oppositely disposed long sides and a transverse side of flattened busbars 4a, 4b of coaxial busbar 4, which creates an optimized contact surface for an effective connection. This configuration achieves an enlarged contact surface, which ensures a robust and reliable cohesive bond connection.

In the embodiments according to Figs. 1 to 12, screws 8a, 8b are each fastened in first housing half 2. Each screw 8a, 8b is equipped with a touch-protected screw head 21 which is protected by plastic overmolding and copmrises a plastic external thread 31. This external thread 31 engages with a corresponding internal thread 32 of a fastening opening 17 in first housing half 2. Fastening opening 17 in first housing half 2, through which screws 8a, 8b are inserted, is covered at least in part by a screw holder 18a, 18b that is connected in a form-fit manner to this housing half 2. This configuration secures screws 8a, 8b against accidental loosening and thus ensures a permanent and secure connection of housing halves 2, 3.

Openings 14 for the screw connections in fastening tabs 13 of intermediate busbars 5a, 5b are each configured as round holes closed all the way around, as shown in Figs. 1, 5 and 7. In contrast, opening 14 in Fig. 3 is configured as an elongated hole open on one side. These versatile configuration options for openings 14 - whether as a round hole or an elongated hole, closed all the way around or open on one side - enable flexible adaptation to the given installation requirements and environments.

The optimized mechanical design of system 20 presented warrants reliability and safety. This includes robust mechanical stability, excellent electrical conductivity, effective touch protection and superior heat regulation, which are essential for long-term and safe use under a wide range of conditions.

The cross-sectional views according to Fig. 6 and Fig. 8, which run along a sectional plane parallel to direction of insertion E, show partition walls 26, which are arranged within housing assembly 2, 3 between receptacles 7a, 7b for separate busbars 6a, 6b and which illustrate the spatial separation and structural support.

As shown in Figs. 1, 2 and 5 to 9, first screw 8a and second screw 8b are each guided through a plastic sleeve 15a, 15b, which is inserted into an opening 14 of corresponding intermediate busbar 5a, 5b. These plastic sleeves 15a, 15b extend from openings 14 to threaded sleeves 9a, 9b, thereby increasing touch protection. This design minimizes the risk of direct contact with the current-carrying parts and contributes to the safety of connection assembly 1.

In accordance with the embodiments shown in Figs. 3, 4 and 10 to 12, the use of plastic sleeves 15a, 15b can alternatively be omitted. In such configurations, intermediate busbars 5a, 5b are directly connected to corresponding busbars 6a, 6b of two separate busbars 6a, 6b. This direct connection simplifies the design and can increase reliability, even if it may not guarantee touch protection to the highest standards.

Depending on the configuration - with or without the integration of a plastic sleeve 15a, 15b
- intermediate busbars 5a, 5b and associated separate busbars 6a, 6b can be spatially separated from one another, as shown in the embodiments according to Figs. 1, 2 and 5 to 9. In such configurations, the screw connections establish not only a fixed mechanical connection, but also a direct electrical connection between intermediate busbars 5a, 5b and separate busbars 6a, 6b

In Fig. 9, the fifth embodiment, intermediate busbars 5a, 5b are configured as multi-layer metal sheets, which gives them a pronounced flexibility. This flexibility is ensured in particular along the plugging direction, i.e. parallel to the longitudinal axis of the screw. The illustration in Fig. 9, highlighted by double arrows near arcuate connection 29a, illustrates these flexibility properties of intermediate busbars 5a, 5b. In addition, limited movability of intermediate busbars 5a, 5b parallel to direction of insertion E is also made possible. As a result, these flexibility properties of intermediate busbars 5a, 5b improve the adaptability of connection assembly 1 to different assembly scenarios.

Although not explicitly shown in the present figures, a cooling device, in particular in the form of an integrated cooling channel, can be integrated into the structure of housing assembly 2, 3 in order to ensure effective heat dissipation from all busbars 4a, 4b, 5a, 5b, 6a, 6b and thereby an optimized operating temperature during the charging process.

Figs. 10 to 12 show an assembly sequence for producing a connection assembly 1 according to the invention.

According to Fig. 10, first housing half 2 and second housing half 3 are each initially provided in a pre-assembled state. In this pre-assembled state, first housing half 2 is equipped with fastening elements 8a, 8b in the form of touch-protected screws already inserted into its fastening openings 17, with coaxial busbar 4 inserted into its receptacle 10 in direction of insertion E, and with intermediate busbars 5a, 5b, which are connected in a cohesive bond manner to exposed busbars 4a, 4b of coaxial busbar 4. Furthermore, second housing half 3 in this pre-assembled state is equipped with separate busbars 6a, 6b inserted into its receptacles 7a, 7b.

Screws 8a, 8b attached to first housing half 2 in Fig. 10 are not yet in a fully inserted preposition. As symbolized in Fig. 10 by the thick arrow pointing vertically downwards, two pre-assembled housing halves 2, 3 can therefore be plugged together to form a housing assembly 2, 3, where this plugging direction runs perpendicular to direction of insertion E.

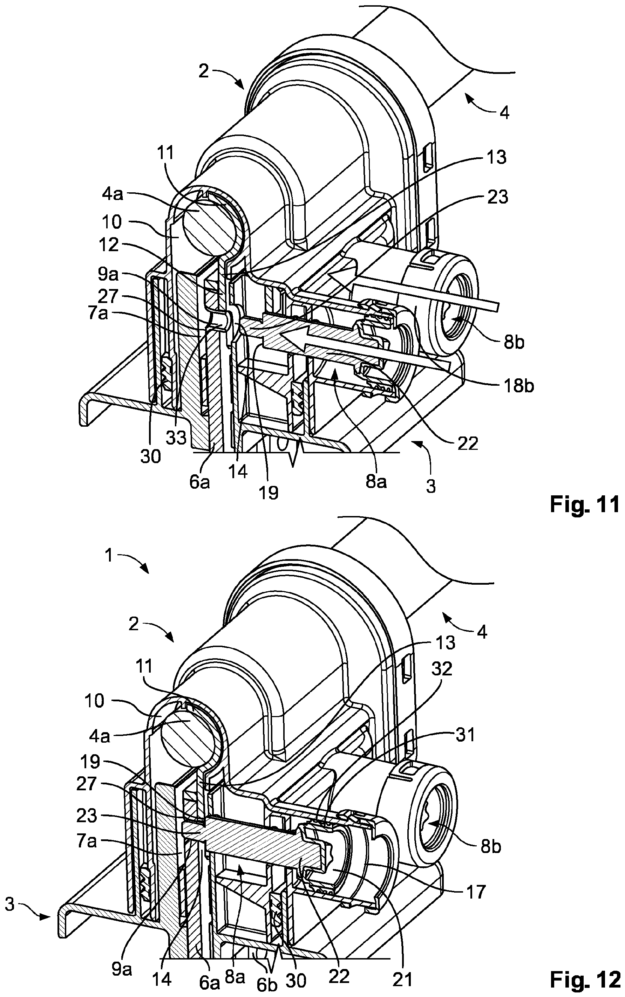

Fig. 11 shows the end of the plugging process in which openings 14 in fastening tabs 13 of intermediate busbars 5a, 5b are aligned with openings 33 of threaded sleeves 9a, 9b fitted into openings 16 of separate busbars 6a, 6b in a direction perpendicular to direction of insertion E and to plugging direction according to Fig. 10. In this intermediate assembly state, according to Fig. 11 with aligned openings 14, 16, 33, inserting and tightening two screws 8a, 8b can now begin. The start of this insertion is symbolized in Fig. 11 by the two thick arrows at screws 8a, 8b in fastening openings 17 of first housing half 2.

Fig. 12 shows the completion of the insertion and screw tightening process of screws 8a, 8b, whereby the assembly process is also completed by obtaining connection assembly 1 according to the invention. In the case of both screws 8a, 8b, each screw end 23 has been passed through opening 14 in fastening tab 13 and thereafter screwed with its external thread 25 into internal thread 24 of threaded sleeve 9a, 9b.

After completing this insertion and screw tightening process of two screws 8a, 8b, enlarged shoulder 19 on screw shaft 22 comes into contact with the surface of fastening tab 13 facing away from respective separate busbar 6a, 6b, as shown in Fig. 12. Since threaded sleeve 9a, 9b also comprises a collar 27 enlarged in diameter that abuts a surface of respective separate busbar 6a, 6b that faces away from respective fastening tab 13, tightening screws 8a, 8b creates a firm, force-fit connection between intermediate busbar 5a, 5b and separate busbar 6a, 6b. Since intermediate busbars 5a, 5b are again fastened in first housing half 2 and separate busbars 6a,6b again in second housing half 3, two housing halves 2, 3 are then simultaneously firmly connected to each other by tightening screws 8a, 8b.

This results in extremely simple assembly. It should be emphasized that, in the embodiment according to Figs. 10 to 12, no separate plastic sleeves 15a, 15b are used like in the embodiments according to Figs. 1, 2 and 5 to 9. Instead, the mutually facing surfaces of intermediate busbars 5a, 5b and separate busbars 6a, 6b come into direct pressing contact by simply inserting and tightening two screws 8a, 8b, which creates a secure mechanical and electrical connection in a simple manner between intermediate busbars 5a, 5b and separate busbars 6a, 6b.

Connection assembly 1 presented is characterized by numerous advantages that make it particularly suitable for applications in advanced electromobility and energy systems. The innovative combination of coaxial busbar 4 with intermediate busbars 5a, 5b not only optimizes electrical conductivity, but also contributes to reducing energy losses to a minimum. Due to its robust design and the implementation of touch-protected components, the assembly provides excellent mechanical stability and increased safety features. In addition, the designed simplicity of assembly enables quick and flexible installation, which can be easily adapted to different operating conditions and requirements.

### List of reference characters

- 1: connection assembly
- 2: first housing half (housing assembly)
- 3: second housing half (housing assembly)
- 4: coaxial busbar
- 4a, 4b: busbars (coaxial busbar)
- 4c, 4d: intermediate/extemal insulation (coaxial busbar)
- 5a, 5b: intermediate busbars
- 6a, 6b: separate busbars
- 7a, 7b: receptacles (for separate busbars)
- 8a, 8b: fastening elements (touch-protected screws)
- 9a, 9b: threaded sleeves
- 10: receptacle (for coaxial busbar)
- 11: first connecting section
- 12: second connecting section
- 13: fastening tab
- 14: opening (fastening tab)
- 15a, 15b: plastic sleeves
- 16: opening (separate busbar)
- 17: fastening opening (first housing half)
- 18a, 18b: screw holder
- 19: shoulder (screw)
- 20: system
- 21: screw head
- 22: screw shank
- 23: screw end
- 24: internal thread (threaded sleeve)
- 25: external thread (screw end)
- 26: partition walls (housing assembly)
- 27: collar (threaded sleeve)
- 28a, 28b: leg (intermediate busbar)
- 29a: arcuate connection
- 29b, 29c: leg (intermediate busbar)
- 30: seal
- 31: plastic external thread (screw head)
- 32: internal thread (fastening opening)
- 33: opening (threaded sleeve)
- E: direction of insertion

## Claims

1. System (20) for connecting two separate busbars (6a, 6b) to a coaxial busbar (4) which comprises at least two busbars (4a, 4b) arranged coaxially to one another,
with a housing assembly (2, 3)
which comprises a receptacle (10) for the coaxial busbar (4), wherein the receptacle (10) extends in a direction of insertion (E), and comprises
a first receptacle (7a) for the one of the two separate busbars (6a) and
a second receptacle (7b) for the other of the two separate busbars (6b),
with a first intermediate busbar (5a) for connecting the receptacle (10) for the coaxial busbar (4) to the first receptacle (7a),
wherein the first intermediate busbar (5a) is configured to be connectable to the one busbar (4a) of the coaxial busbar (4) in an electrically conductive manner and
with a second intermediate busbar (5b) for connecting the receptacle (10) for the coaxial busbar (4) to the second receptacle (7b),
wherein the second intermediate busbar (5b) is configured to be connectable to the other busbar (4b) of the coaxial busbar (4) in an electrically conductive manner, and
wherein the first and the second intermediate busbar (5a, 5b) can be arranged in the receptacle (10) in the direction of insertion (E) spaced apart from one another.

2. System (20) according to claim 1, wherein the current-conducting connection between the first intermediate busbar (5a) and the one busbar (4a) of the coaxial busbar (4) and/or the current-conducting connection between the second intermediate busbar (5b) and the other busbar (4b) of the coaxial busbar (4) is or are configured as a cohesive bond connection.

3. System (20) according to claim 1 or 2, with a first touch-protected fastening element (8a) that can be operated from outside the housing assembly (2, 3) and that projects through the first intermediate busbar (5a) into the first receptacle (7a), and with a second touch-protected fastening element (8b) that can be operated from outside the housing assembly (2, 3) and that projects through the second intermediate busbar (5b) into the second receptacle (7b).

4. System (20) according to claim 3, wherein at least one of the fastening elements (8a, 8b) is configured as a touch-protected screw.

5. System (20) according to claim 4, wherein the system (20) comprises at least one threaded sleeve (9a, 9b) that is fastened to one of the two separate busbars (6a, 6b), in particular inserted into an opening (16) thereof, and is screwed to a touch-protected screw (8a, 8b).

6. System (20) according to one of the preceding claims 1 to 5, wherein the first receptacle (7a) and the second receptacle (7b) in the housing assembly (2, 3) extend in a direction that runs transversely to the direction of insertion (E).

7. System (20) according to one of the preceding claims 1 to 6, wherein the first intermediate busbar (5a) and the second intermediate busbar (5b) each comprise a first connecting section (11) that is arranged in the receptacle (10) for the coaxial busbar (4) and a second connecting section (12) that is arranged either in the first receptacle (7a) for the one of the two separate busbars (6a) or in the second receptacle (7b) for the other of the two separate busbars (6b).

8. System (20) according to claim 7, wherein the first connecting section (11) is configured to be sleeve-shaped or hollow-cylindrical at least in part or planar at least in part.

9. System (20) according to claim 7 or 8, wherein a main direction of extension of the first connecting section (12) is changed as compared to a main direction of extension of the first connecting section (11), and wherein this change in direction is formed in particular by an angular deformation between the connecting sections (11, 12).

10. System (20) according to one of the preceding claims 7 to 9, wherein the second connecting section (12) is configured as a fastening tab (13) and this fastening tab (13) comprises an opening (14) through which the corresponding fastening element (8a, 8b) is guided.

11. System (20) according to claim 10, wherein the opening (14) in the fastening tab (13) is insulated from the corresponding busbar (6a, 6b) of the two separate busbars (6a, 6b).

12. System (20) according to one of the preceding claims 1 to 11, wherein the first intermediate busbar (5a) and the second intermediate busbar (5b) are each configured as L-shaped elements.

13. System (20) according to one of the preceding claims 1 to 12, wherein the housing assembly (2, 3) comprises a first housing half (2) in which the receptacle (10) for the coaxial busbar (4) is disposed, and a second housing half (3) which can be plugged together with the first housing half (2) and in which both the first receptacle (7a) as well as the second receptacle (7b) are disposed.

14. System (20) according to claim 13, wherein the intermediate busbars (5a, 5b) are arranged, at least in part, in the second housing half (3).

15. System (20) according to claim 13 or 14 to the extent related to claim 3 or a claim dependent thereupon, wherein the fastening elements (8a, 8b) are attached to the first housing half (2).

16. Connection assembly (1) comprising a system (20) according to one of the preceding claims 1 to 15, a coaxial busbar (4) as well as two separate busbars (6a, 6b), wherein the one of the two separate busbars (6a) is connected to the first intermediate busbar (5a) by way of a first fastening element (8a) in the first receptacle (7a) and the other of the two separate busbars (6b) is connected to the second intermediate busbar (5b) by way of a second fastening element (8b) in the second receptacle (7b).

17. Connection assembly (1) according to claim 16 to the extent related to claim 10 or 11, wherein the fastening tabs (13) of the intermediate busbars (5a, 5b) each directly abut a corresponding one of the two separate busbars (6a, 6b).

18. Connection assembly (1) according to claim 16 or 17, wherein, in the receptacle (10) for the coaxial busbar (4), the intermediate busbars (5a, 5b) are each connected in a cohesive bond manner to a corresponding busbar (4a, 4b) of the coaxial busbar (4).

19. Connection assembly (1) according to one of the preceding claims 16 to 18 to the extent related to one of the claims 13 to 15, wherein the first housing half (2) is configured to be pre-assembled with the fastening elements (8a, 8b), the coaxial busbar (4), and the intermediate busbars (5a, 5b), and the second housing half (3) is configured such that it can be plugged together with the first housing half (2).

20. Connection assembly (1) according to one of the preceding claims 16 to 19 to the extent related to one of the claims 13 to 15, wherein the second housing half (3) is configured to be pre-assembled with the two separate busbars (6a, 6b).
